(19) Europäisches Patentamt
European Patent Office
Office européen des brevets

(11) EP 1 215 677 A1

(12) EUROPEAN PATENT APPLICATION

(43) Date of publication:
**19.06.2002 Bulletin 2002/25**

(51) Int Cl.7: **G11B 27/28**, G11B 27/32, G11B 27/034, G06F 17/30

(21) Application number: **01310202.5**

(22) Date of filing: **06.12.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **07.12.2000 GB 0029892**

(71) Applicant: **SONY UNITED KINGDOM LIMITED**
**Weybridge KT13 0XW (GB)**

(72) Inventors:
- **McGrath, Mark John**
  **Berkshire, RG12 3HM (GB)**
- **Kydd, Andrew**
  **Hampshire RG22 4NA (GB)**
- **Thorpe, Jonathan**
  **Winchester, Hampshire SO23 9PP (GB)**

(74) Representative: **Turner, James Arthur et al**
**D. Young & Co.,**
**21 New Fetter Lane**
**London EC4A 1DA (GB)**

# (54) Video editing apparatus selecting representative video images

(57) A video information processing apparatus for selecting a representative video image from a group of video images in dependence upon a frequency of occurrence of a plurality of possible values of at least one image property. The processing apparatus comprises:

an image data accumulator for calculating the frequency of occurrence of said plurality of values of the image property for each frame of said group;
a representative frequency calculation module for calculating a representative frequency of occurrence for each of said plurality of possible values of the image property wherein said representative frequency is calculated with respect to said group of video images;
a representative video image extractor for selecting said representative video image by selecting an image of said group which has a frequency of occurrence of said plurality of possible values close to said average frequency of occurrence.

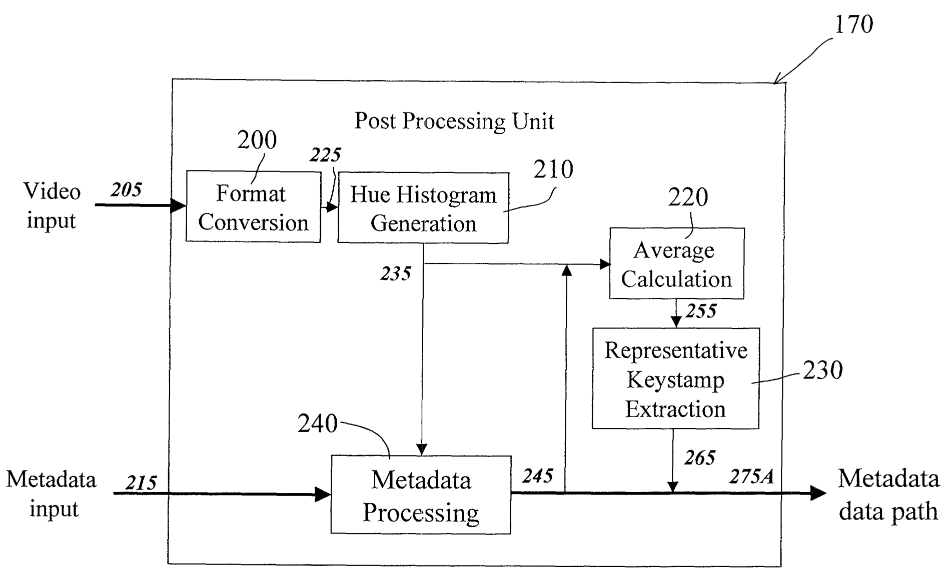


FIGURE 3

EP 1 215 677 A1

## Description

The present invention relates to the field of video editing.

Video editing was traditionally carried out by copying shots and scenes from one tape to another. Although this process protects the master tapes from damage during the editing process, it has the disadvantage of being very time consuming. Editing is controlled using digital "*timecodes*" which uniquely identify each video picture frame on a reel of tape. Due to the high expense of *"on-line editing"* where editing is performed by copying directly from the master tapes, it is common practice to edit off the main production line on a low-quality copy of the video footage. This is known as "*off-line editing".*

During an off-line edit, the position of each video edit transition is logged against a timecode to produce an Edit Decision List (EDL) which is generally stored in electronic form. The EDL enables edit decisions made in an off-line edit suite to be easily transferred to the on-line editing process. The on-line edit is still required to obtain a final edited tape of transmission quality.

Some off-line editing systems make use of low band U-Matic or VHS tapes; however more advanced systems are computer-based and involve recording a version of the sound and images from the master recording onto the computer's hard disc. These computer based off-line editing systems offer the added flexibility of *"non-linear editing"* whereby video footage can be edited starting from any point in the recorded sequence. The process is still time-consuming because the images have to be loaded into the editing system, perhaps in real time, in a process called conforming and the final EDL produced has to be conformed again on an on-line edit suite.

A typical computer-based non-linear editing apparatus is schematically illustrated in Figure 1 of the accompanying drawings. The apparatus comprises a digital video recorder 10 which can be used to transfer video data to or from a computer-based disc storage 50. During the editing process a copy of the master video footage is transferred from the original recording medium to the disc storage 50. The editing process is software driven and is controlled by a central processing unit (CPU) 40. The user interacts with the editing apparatus via a keyboard 20, a mouse (not shown) or other controls (not shown) which communicate with the central processing unit 40. A visual interface is provided via a monitor 120. The desktop environment of the editing software typically includes a viewing window 110 in which video shots selected by the user can be replayed.

A control panel 70 comprises control buttons with functions such as play, fast forward, rewind, pause and stop which are similar to the functions on a standard video recorder. The user activates these control buttons using the keyboard 20 and a mouse. Editing functions such as cutting of video and audio are provided via a toolbar 100 and the user will employ functions selected from pull-down menus on the toolbar to edit individual shots, to create sub-shots and to add captions and audio effects. The viewing window 110 is used to assess and review the content of shots when considering their inclusion in the final edited sequence and to replay the sequence itself. The user will typically segment the original footage into separate shots by specifying start and end points for each shot. The duration of the shots may vary from a few seconds to many minutes. These shots will then form the basis for constructing a final edited sequence.

The segmented shots are represented by a group of thumbnail images 90 on the desktop and typically each thumbnail image will correspond to the first frame of the associated shot. The user can double-click on these thumbnail images to initiate replay of the video footage in the viewing window 110. Alternatively the thumbnail images can be dragged and dropped into the viewing window 110 to initiate replay in real time. In practice each shot may be viewed several times over during assembly of the final sequence of shots. This will be necessary in order that the editor becomes familiar with the content of each shot. Edited shots are arranged in a chronological sequence by placing them on a timeline 80 and the full sequence can be replayed in the viewing window 110.

The timeline will have several channels for the arrangement of video and audio sequences and captions. The timeline makes it easy to experiment with different editing options by simple rearrangement of the sequence of shots.

However the process of replaying individual shots, perhaps repeatedly, in real time to assess and review the content can be very time consuming, particularly in the case where large numbers of shots form the basis for compiling a programme. Other than replaying the shots, the user has no means to assess their overall content except for the first frame which is displayed as a thumbnail or perhaps a descriptive clip title.

The invention provides a video information processing apparatus for selecting a representative video image from a group of video images in dependence upon a frequency of occurrence of a plurality of possible values of at least one image property, said processing apparatus comprising:

> an image data accumulator for calculating the frequency of occurrence of said plurality of values of the image property for each frame of said group;
> a representative frequency calculation module for calculating a representative frequency of occurrence for each of said plurality of possible values of the image property wherein said representative frequency is calculated with respect to said group of video images;
> a representative video image extractor for selecting

said representative video image by selecting an image of said group which has a frequency of occurrence of said plurality of possible values close to said representative frequency of occurrence.

The invention provides the capability to select a representative video image from a group of images by taking into account the contents of each image in the group and selecting a representative image which has image values close to the predominant overall contents of the group of frames.

Selecting a representative image in this way has the advantage that information that reflects the overall contents of a video shot can be seen at a glance without the need to replay the entire shot, by displaying a single representative image for each shot in the editor's desktop. This is likely to reduce the time required to edit video footage with respect to prior art systems which simply display the first image of a shot on the editor's desktop.

Since the first frame of a shot is unlikely to reflect the predominant overall content of all of the frames in the shot it is more likely that in prior art systems the editor will be required to play and replay the shots to assess their average content making the editing process more laborious.

Another advantage of the representative keystamp selection according to embodiments of the invention is that the process is automated hence all of the information about the predominant content of each shot can available to the editor simultaneously at the beginning of the editing process.

The invention also provides the facility to select image properties which are appropriate to the video footage itself. For example the average contents of a shot could be determined with respect to a luminance signal or with respect to a colour signal. Furthermore several image properties could be used together in which case the average contents of the each shot could be determined with respect to a combination of the specified image properties.

Although each image in a shot could be included in the group of images to be used for the calculation of the average frequencies of occurrence, it is also possible to select a representative group of images from each shot such as every second image, which should reduce the time spent processing the image property data.

The selection of the representative image could be performed in the camera itself as the images are acquired so that the data is immediately available when the video footage is transferred to an editing apparatus. This saves having to process the images again before the representative images are located. Alternatively, the selection of representative images can be performed in a post-processing unit which means that the number of hardware components in the camera may be reduced, the system may be used with existing cameras and software associated with the invention should be more easily updated.

It will be appreciated that any one of a variety of different image properties could be used to determine the representative contents of the group of frames however it is advantageous if the image property is a colour property since the data for colour properties is likely to be available during the recording or from the recorded video footage and colour values should be easily converted from one colour space to another. The colour property used could be either a digital colour property or an analogue colour property.

Although any colour signal can be used as the image property in embodiments of the invention, the apparatus is particularly effective when the colour property is a hue signal because the hue signal contains only colour information and no luminance information. This has the advantage that if two of more images have identical content but they were captured in different lighting conditions, the hue values for these images will still be consistent despite the difference in lighting. This means that when the average frequencies of occurrence are calculated using the hue signal, the selection of the representative image is less likely to be influenced by changes in lighting conditions due to effects such as the sun moving behind clouds. Furthermore since the hue values lie within a well defined range of $0° \leq hue < 360°$, the hue data is easily sub-divided into groups of possible values for calculation of frequencies of occurrence.

It will be appreciated that a restricted range of possible values of an image property could be used such as hue signal values in the range $90° \leq hue \leq 270°$ only. Such a restricted range may be appropriate where certain possible values of an image property more strongly influence the image content than others. A calculation using such a restricted range is likely to be less time consuming however, using a full range of possible values is advantageous because it will include more information about the components of each image which should improve the likelihood of selecting a representative image which closely reflects the average contents of the group.

Although the plurality of possible values of the image property can be discrete values it is advantageous to define possible values consisting of predetermined ranges, particularly in cases where the image property values vary continuously, because these ranges can be adjusted so that the frequencies of occurrence are high enough to give an appropriate statistical significance.

It will be appreciated that the span of the predetermined range corresponding to each of the possible values can potentially be varied for a given image property however the calculations are simplified by choosing contiguous predetermined ranges with identical spans such that a histogram is formed. The value at which the peak in the frequency of occurrence occurs for each frame gives a good indication of the mean value of the

image property for each image and histograms of fixed bin size (i.e. identical span) for each image can be directly compared. Where a fixed bin size is used, an average histogram is easily calculated by combining histograms from each image of the group.

Although the plurality of possible values could consist of individual values representing two pixels or even larger groups of pixels it is advantageous if the plurality of values includes an individual value for each pixel of the image. Inclusion of an individual value for each pixel means that more information is taken account of in the average calculations which will should result in a better estimate of the average contents of a shot hence it is more likely that a suitable representative image will be selected.

It will be appreciated that the representative video image extractor according to embodiments of the invention could select a representative image which is close to the average frequency of occurrence of the plurality of possible image values, in a variety of alternative ways such as by direct comparison of the peaks of the histograms for each image in the group or by comparing the most frequently occurring image value for each image with the most frequently occurring image value for the group of images. It is advantageous however, if the image extractor first calculates a difference between the representative frequency of occurrence and the frequency of occurrence for each of the plurality of possible values of the image property and calculates a single-valued difference; combines the values of the difference for each of the plurality of possible values; and finally selects an image from the group of images which corresponds to the smallest of the single-valued differences. The image of the group which has the smallest single-valued difference can be considered closest in content to the average contents of the associated group of images as determined from the average frequencies of occurrence of the particular image property.

It will be appreciated that it is possible that more than one frame of the group may have a corresponding single-valued difference which coincides with the smallest single-valued difference and in this case any of these frames could be selected as the representative image. However the algorithm is simplified if the first of the images found to have the smallest single-valued difference is selected.

Selecting a representative image with the smallest single-valued difference is more likely to result in selection of an image which closely reflects the predominant overall contents of a group of images however it may be sufficient to define an upper limit for the single-valued difference and to select any one of the images of the group which has a single valued difference below this upper threshold. Implementing such an upper limit is less rigorous than selecting an image with the smallest single-valued difference but it may be sufficient and is likely to be useful in practice, particularly if the contents of the group of images does not vary a great deal.

It will be appreciated that the video information processing apparatus can use image properties supplied directly by the video camera or from the tape on which the video images were stored, however it is advantageous to include a format conversion unit in the apparatus for converting from a video signal in an arbitrary colour space to a video signal in the hue-saturation-value colour space. This has the advantage that the processing apparatus can take its input from digital or analogue cameras and digital or analogue video tape and it can use this input to obtain a representative image using the hue image property which is less sensitive to changes in lighting conditions.

Although the representative images can be selected after shots and sub-shots have been defined by an editor and prior to compilation of the shots to form an edited programme, it is advantageous to include in the video image processing apparatus a metadata processing unit for performing shot and sub-shot segmentation operations in an automated process. This has the advantage that the representative image selection hardware can be located, at least in part, in the camera and the representative images can be made available immediately on transferral of the video footage to the editing apparatus. Since shot and sub-shot segmentation can be performed using hue histogram data and representative images can also be extracted using hue histogram data , the data can be generated once and used for both processes.

Embodiments of the invention will now be described by way of example only with reference to the accompanying drawings, in which:

Figure 1 shows a typical computer based off-line editing system;

Figure 2 shows the basic components of an audio-visual processing system according to embodiments of the invention;

Figure 3 shows a post-processing unit according to a first embodiment of the invention;

Figure 4 shows a camera and post-processing unit according to a second embodiment of the invention;

Figure 5 shows a camera and post-processing unit according to a third embodiment of the invention;

Figure 6A is a schematic diagram to illustrate hue; and

Figure 6B is an example of a hue histogram.

Figure 2 shows the basic components of a video recording system according to the present invention. The system comprises a camera 150 for recording video footage. The camera is supplied with a data storage unit 160 comprising a video tape and a removable PC card. The video tape is used for recording audio and video data together with the in/out timecodes for each shot and possibly a unique code known as a UMID which identifies the recorded material. The PC card storage is used for supplementary information about the recorded

video footage known as "*metadata*" and also for storage of the "*audio visual proxy"* which is a low-bit-rate copy of audio and video created from the broadcast quality high-bit-rate master. The metadata will typically include information about sub-shot segmentation and information used to generate thumbnail images for each shot for subsequent use in an editing suite. The camera 150 is linked to a post-processing unit 170 such that information can be communicated either by a local area network or by physically transferring the PC card from the camera 150 to the post-processing unit 170. The post-processing unit is equipped with data storage capacity and software analysis tools for processing the metadata, performing such functions as sub-shot segmentation and interview detection. The post-processing unit 170 will perform at least part of the processing required to extract the representative keystamps to be supplied as thumbnail images to the video editing unit.

Figure 3 shows a representative keystamp extraction apparatus according to a first embodiment of the invention. In this case the post-processing unit 170 performs all stages of the representative keystamp extraction algorithm. The post-processing unit is supplied with an audio visual input signal 205 which is fed directly to a format conversion module 200.

The format conversion module 200 performs the function, if the input format so requires, of transforming between colour spaces. Image pick-up systems in a camera detect primary-colour red, green and blue (RGB) signals but these are stored on analogue video tape (such as PAL and NTSC) in a different colour space known as YUV space while digital video systems use the standard MPEG YCrCb colour space. Y represents the luminance signal, the U signal is obtained from B-Y and the V signal is obtained from R-Y. To convert from RGB to YUV spaces the following equations can be used:

$$Y = 0.299R + 0.587G + 0.114B$$
$$U = 0.492\ (B-Y)$$
$$V = 0.877\ (R-Y).$$

The digital YCrCb colour space is a subset of YUV that scales and shifts the chrominance values into the range from zero to one inclusive which is appropriate for digital storage. To convert from RGB to YCrCb the following equations can be used:

$$Y = 0.299\ R + 0.587\ G + 0.114\ B$$
$$Cr = \{(B - Y)/2\} + 0.5$$
$$Cb = \{(R - Y)/1.6\} + 0.5$$

A third colour space and the appropriate colour space for representative keystamp extraction is hue, saturation and value (HSV) where the hue reflects the dominant wavelength of the spectral distribution, the saturation is a measure of the concentration of a spectral distribution at a single wavelength and the value is a measure of the intensity of the colour. In the HSV colour space hue specifies the colour in a 360° range as illustrated by the hexagon of Figure 6A. In this hexagon 0° corresponds to red, 60° to yellow, 120° to cyan, 180° to blue and 240° to magenta. S and V signals are both in the range from 0 to 1 inclusive. A pure hue specifies an angle for H and sets S=V=1. Decreasing V is analogous to adding black to produce a different shade while decreasing S is analogous to adding white to produce a different tint. The HSV colour space has the advantage that the colour information is derived completely from the hue value H and is completely separate from the intensity information specified by S and V. Thus the value of hue should be the same for frames corresponding to the same scene in different lighting conditions. This is why the HSV colour space is particularly suitable for representative keystamp extraction where we are interested in the basic content of the frames in a shot. The format conversion module 200 converts from an arbitrary colour space to HSV colour space to enable data extraction for the hue histograms.

A second input to the post-processing unit 170 is a metadata input signal 215 which is received by a metadata processing module 240. The metadata processing module 240 produces and supplies an input signal 245 including sub-shot segmentation information to an average calculation module 220. A hue histogram generation module 210 analyses the hue signals for the pixels of each frame and produces hue histogram data on a frame-by-frame basis.

The hue histogram generation module 210 compiles the hue values for the pixels comprising a frame to produce a histogram of frequency of occurrence against hue value. The hue values are in the range $0° \leq hue < 360°$ and the bin-size of the histogram, although potentially adjustable, would typically be 1°. Since hue histograms will be compared between frames the bin size must be identical at least for every frame of a shot. Figure 6B illustrates a hue histogram where the occurrence frequency values for adjacent bins have been interpolated and plotted as a continuous curve. In this case the hue histogram has a peak in the yellow to green region of the hue spectrum. Hue values will generally be provided for every pixel of the frame but it is also possible that a single hue value will be corresponding to a group of several pixels.

The hue histogram data is input to the average calculation module 220 where it is combined with the sub-shot segmentation information to produce an output signal 255 comprising average hue histogram data for each shot and sub-shot.

The average calculation module 220 uses the information on shot segmentation to group sets of frames according to the shots with which they are associated. The hue histogram information each frame of the shot is used to determine an average histogram for the shot according to the formula:

$$h'_i = \frac{\sum_{F=1}^{n_F} h_i}{n_F}$$

where i is an index for the histogram bins, $h'_i$ is the average frequency of occurrence of the hue value associated with the ith bin, $h_i$ is the hue value associated with the ith bin for frame F and $n_F$ is the number of frames in the shot. If the majority of the frames in the shot correspond to the same scene then the hue histograms for those shots will be similar in shape therefore the average hue histogram will be heavily weighted to reflect the hue profile of that predominant scene.

The representative keystamp extraction module 230 performs a comparison between the hue histogram for each frame of a shot and the average hue histogram for that shot. It calculates a singled valued difference $diff_F$:

$$diff_F = \sqrt{\sum_{I=1}^{nbins} \left(h'_i - h_i\right)^2}$$

For each frame F ($1 \leq F \leq n_F$) of a shot and selects one frame from the $n_F$ frames which has the minimum value of $diff_F$. The above formula represents the preferred method for calculating the single valued difference; however it will be appreciated that alternative formulae can be used to achieve the same effect. An alternative would be to sum the absolute value of the difference ($h'_i$ - $h'_i$), to form a weighted sum of differences or to combine difference values for each image property of each frame. The frame with the minimum difference will have the hue histogram closest to the average hue histogram and hence it is preferably selected as the representative keystamp (RKS) image for the associated shot. The frame for which the minimum difference is smallest can be considered to have the hue histogram which is closest to the average hue histogram. If the value of the minimum difference is the same for two frames or more in the same shot then there are multiple frames which are closest to the average hue histogram however the first of these frames can be selected to be the representative keystamp. Although preferably the frame with the hue histogram that is closest to the average hue histogram is selected to be the RKS, alternatively an upper threshold can be defined for the single valued difference such that the first frame in the temporal sequence of the shot having a minimum difference which lies below the threshold is be selected as an RKS. Although it will be appreciated that, in general, any frame of the shot having a minimum difference which lies below the threshold is could be selected as an RKS

The RKS images can be used in the off-line edit suite as the group of thumbnail images 90 to represent the contents of the shots. The RKS images should more accurately reflect the average contents of a shot than the prior art systems which simply use the first frame of the shot as the thumbnail image.

The representative keystamp extraction module 230 outputs a representative keystamp information signal 265 which is combined with the output signal 245 of the metadata processing module 240 to form an output signal 275A which is sent out from the post-processing unit along a metadata data path.

Figure 4 shows a representative keystamp extraction apparatus according to a second embodiment of the invention. In this embodiment the format conversion and hue histogram generation are performed in the camera 150 while the average calculation and representative keystamp extraction is performed separately in the post-processing unit 30. A main camera unit 250 generates the audio visual data signal 205 which is supplied as input to the image processing module 260 where it is processed and then output from the camera 150 through the main image data path 295.

The main camera unit 250 also supplies a signal 285 (essentially the same as the signal 205) to a metadata generation module 280 which generates an output metadata signal 335. The audio visual data 205 is also supplied as input to the format conversion module 200 where the RGB chrominance data is converted to HSV format data and the output signal 225 is produced and fed directly to the hue histogram generation module 210.

The output signal 235 comprises hue histogram data for each frame and this is combined with the output signal 335 from the metadata generation module 280 to form a signal 275B. The signal 275B is output from the camera 150 along the metadata data path which is input to the post-processing unit 170. In the post-processing unit 170 the input from the metadata data path 275B is input to the metadata processing module 240 where the hue histogram data and other metadata are processed to produce an output signal 305 which includes shot and sub-shot segmentation information.

The signal 305 is provided as input to the average calculation module 220 which calculates the average hue histogram for each shot on the basis of the hue histogram values and shot segmentation metadata. The output signal 255 of the average calculation module 220 is subsequently supplied to the representative keystamp extraction module 230 where a representative keystamp is selected for each shot on the basis of the minimum difference between the average histogram and a respective frame of the shot. The representative keystamp data signal 345 is output from the post-processing unit 170 and will be made available for use in the off-line editing apparatus.

Figure 5 shows a representative keystamp extraction apparatus according to a third embodiment of the invention. In this embodiment the format conversion, hue histogram generation and average calculation are performed in the camera 10 and only the representative keystamp extraction is performed separately in the post-processing module 170.

The main camera unit 200 generates the audio visual data signal 205 which is supplied as input to the image processing module 260 where it undergoes standard processing and is then output from the camera 150 through the main image data path 295. The main camera unit 250 also supplies the audio visual signal 285 to the metadata generation module 280. In this embodiment there is a facility for the camera operator to manually define the beginning and end of each shot using a camera control 270 which could be for example a button or switch.

The shot segmentation information from the camera control 270 is combined with the signal 285 from the main camera unit 250 to form a signal 315 which is supplied as input to the metadata generation module 280. The audio visual data signal 205 is also supplied as input to the format conversion module 200 where the RGB chrominance data is converted to HSV format data the output signal 225 is fed as input to the hue histogram generation module 210. The hue histogram generation module 210 outputs the signal 235 which is supplied to both the average calculation module 220 and the metadata generation module 280. The metadata generation module 280 uses the hue histogram data from the hue histogram generation module output signal 235 to produce the output signal 335 containing shot and sub-shot segmentation information which it supplies to the average calculation module 220.

The output signal 225 is generated by the average calculation module 225 and it is combined with output 335 of the metadata generation module to produce an output signal 275C which is output from the camera 150 along the metadata data path which is fed directly to the post-processing unit 170.

In the post-processing unit 170, the metadata data path signal 275C is supplied to the metadata processing module 240 where processing operations such as interview detection are performed and then an output signal 325 is generated and supplied as input to the representative keystamp extraction module 230. This module selects a frame from each shot as a representative keystamp by calculating the difference between the average hue histogram and the hue histogram of each frame of the shot. The RKS data 345 is output from the post-processing unit 170 and can be stored electronically or supplied directly to the off-line editing system.

## Claims

1. A video information processing apparatus for selecting a representative video image from a group of video images in dependence upon a frequency of occurrence of a plurality of possible values of at least one image property, said processing apparatus comprising:

   an image data accumulator for calculating the frequency of occurrence of said plurality of values of the image property for each frame of said group;
   a representative frequency calculation module for calculating a representative frequency of occurrence for each of said plurality of possible values of the image property wherein said representative frequency is calculated with respect to said group of video images;
   a representative video image extractor for selecting said representative video image by selecting an image of said group which has a frequency of occurrence of said plurality of possible values close to said representative frequency of occurrence.

2. An apparatus according to claim 1 wherein said representative frequency is an average frequency.

3. An apparatus according to claim 1 wherein said image property is a colour property.

4. An apparatus according to any one of claims 1 to 3 wherein said colour property is a hue signal.

5. An apparatus according to any one of claims 1 to 4 wherein said possible values includes a full range of possible values of said image property.

6. An apparatus according to any one of claims 1 to 5 wherein each one of said possible values comprises a predetermined range of values of said image property.

7. An apparatus according to claim 6 wherein said predetermined ranges for said possible values are contiguous ranges each having identical span and the ranges cover the full range of possible values of the image property such that a histogram of said frequency of occurrence is formed for each of said images.

8. An apparatus according to any one of the preceding claims wherein said plurality of values comprises an image property value for each pixel of the respective image.

9. An apparatus according to any one of the preceding claims wherein said representative video image extractor is operable:

to calculate a difference between said representative frequency of occurrence and said frequency of occurrence for each of said plurality of possible values;
to combine the values of said difference for each of said plurality of possible values to produce one single-valued difference for each image; and
to select said representative video image by selecting an image in said group of images which corresponds to the smallest of said single-valued differences .

**10.** An apparatus according to any one of claims 1 to 8 wherein said representative video image extractor is operable:

to calculate a difference between said representative frequency of occurrence and said frequency of occurrence for each of said plurality of possible values;
to combine the values of said difference for each of said plurality of possible values to produce one single-valued difference for each image; and
to select said representative video image by selecting an image in said group of images which corresponds to a single-valued difference that lies below a predetermined threshold .

**11.** An apparatus according to any one of claims 4 to 9 comprising a format conversion unit for converting from a video signal in an arbitrary colour space to a video signal in the hue-saturation-value colour space.

**12.** An apparatus according to according to claim 11 comprising a user control for performing shot and sub-shot segmentation operations during recording of said video images.

**13.** A video information processing method for selecting a representative video image from a group of video images in dependence upon a frequency of occurrence of a plurality of possible values of at least one image property, said processing method comprising the steps of:

calculating the frequency of occurrence of said plurality of values of the image property for each frame of said group;
calculating a representative frequency of occurrence for each of said plurality of possible values of the image property wherein said representative frequency is calculated with respect to said group of video images;
selecting said representative video image by selecting an image of said group which has a frequency of occurrence of said plurality of possible values close to said representative frequency of occurrence.

**14.** Computer software having program code for carrying out a method according to claim 13 or 15.

**15.** A data providing medium by which computer software according to claim 16 is provided.

**16.** A medium according to claim 17, the medium being a transmission medium.

**17.** A medium according to claim 17, the medium being a storage medium.

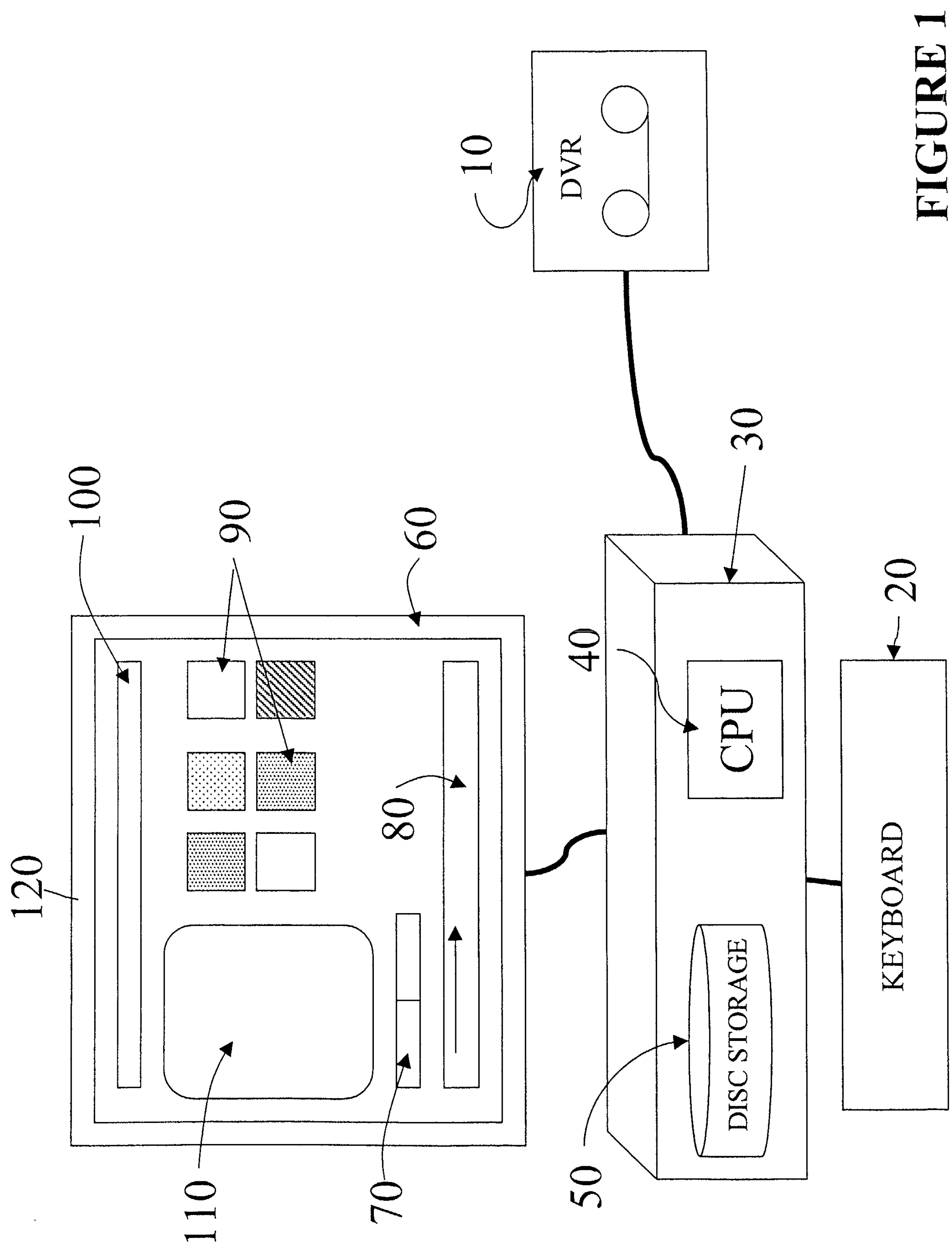
DVR
10
30
CPU
40
DISC STORAGE
50
KEYBOARD
20
60
90
100
120
80
110
70

FIGURE 1

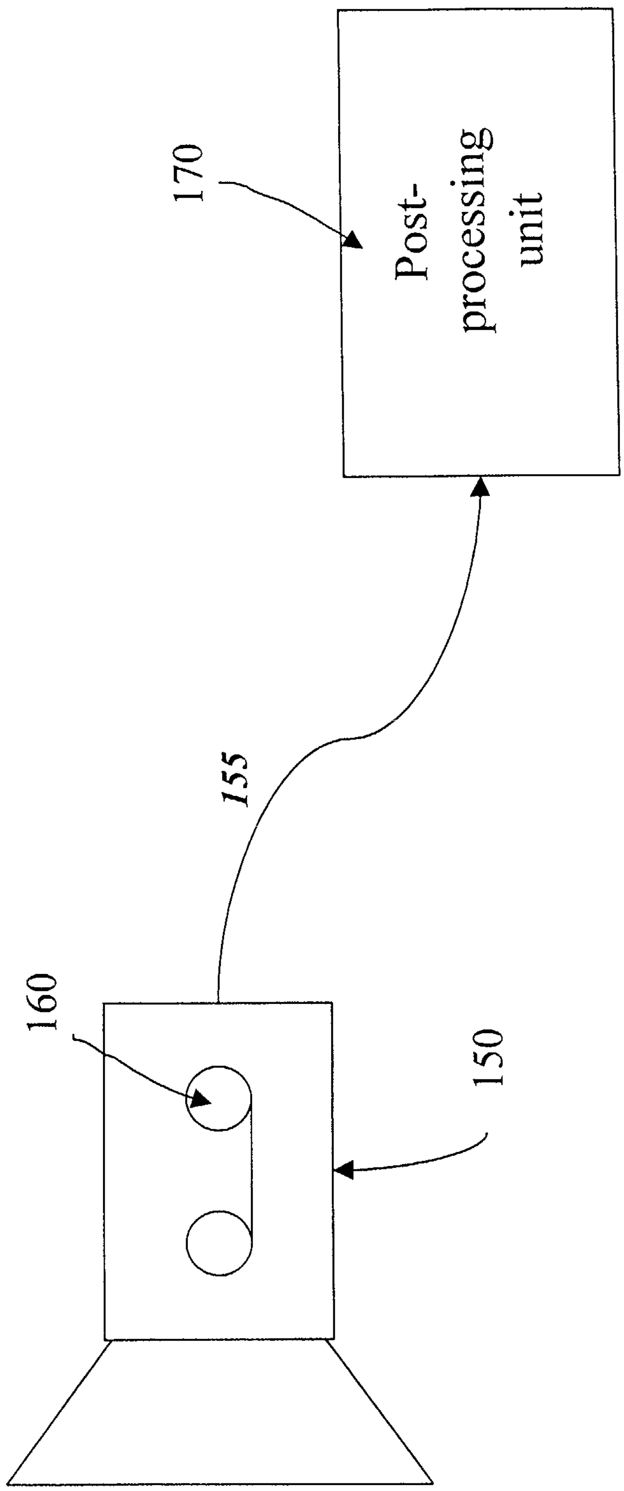


FIGURE 2

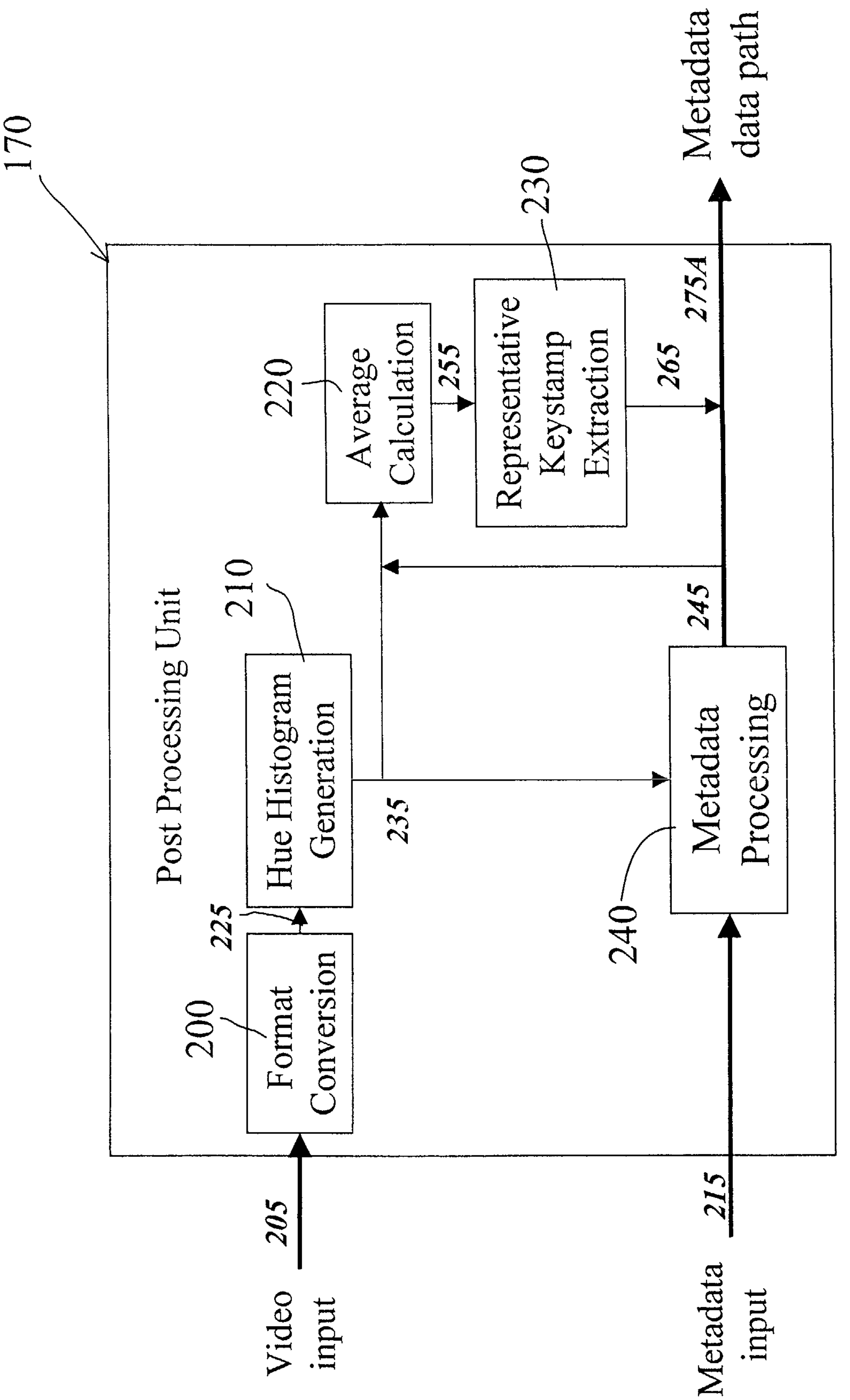
170
Post Processing Unit
Format Conversion
200
Hue Histogram Generation
210
Average Calculation
220
Representative Keystamp Extraction
230
Metadata Processing
240
Video input
205
Metadata input
215
225
235
245
255
265
275A
Metadata data path

FIGURE 3

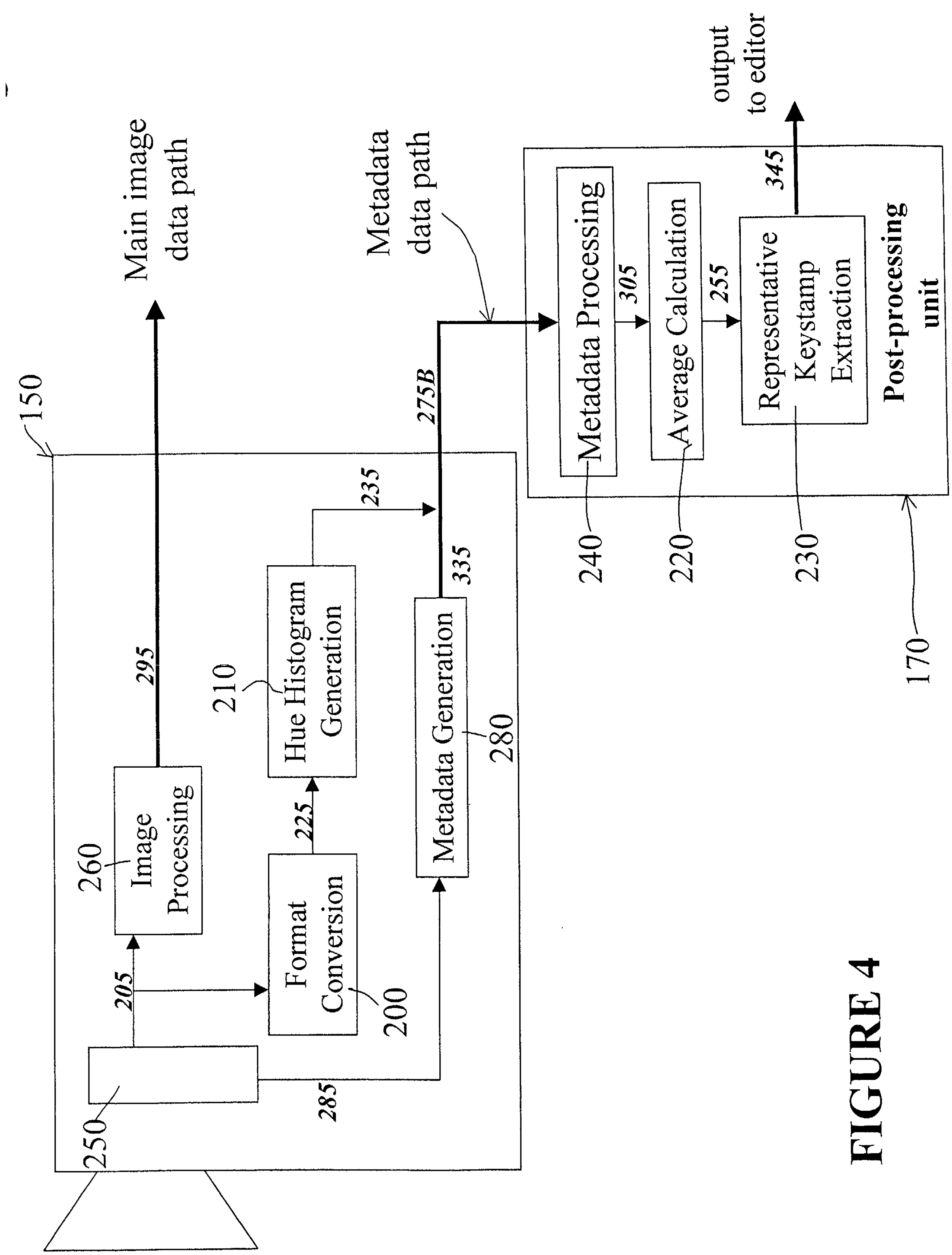
Main image data path
Metadata data path
output to editor
Image Processing
Format Conversion
Hue Histogram Generation
Metadata Generation
Metadata Processing
Average Calculation
Representative Keystamp Extraction
Post-processing unit
150
170
200
205
210
220
225
230
235
240
250
255
260
275B
280
285
295
305
335
345

FIGURE 4

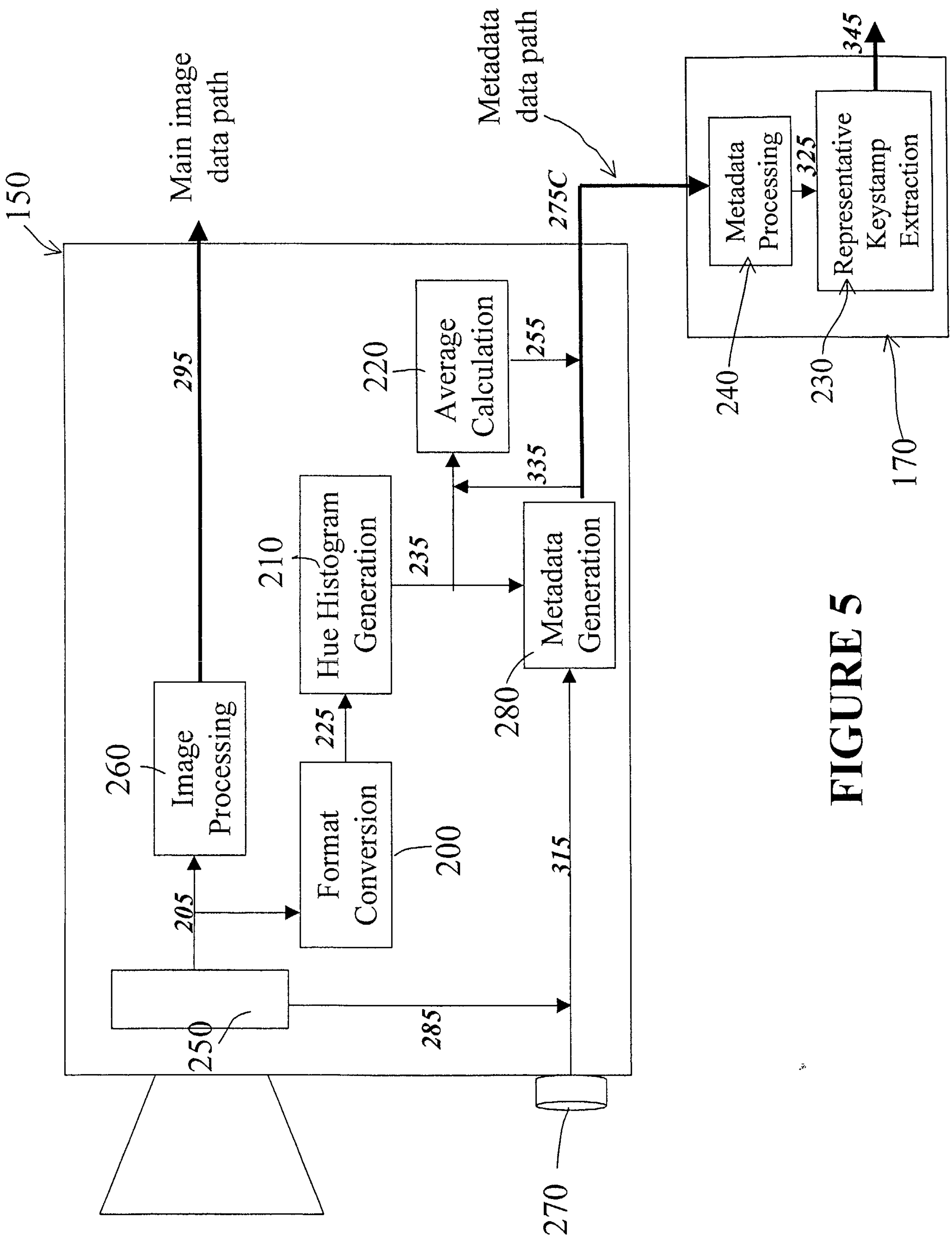
150
Main image data path
Metadata data path
275C
345
Metadata Processing
325
Representative Keystamp Extraction
240
230
170
295
220
Average Calculation
255
335
210
Hue Histogram Generation
235
Metadata Generation
280
260
Image Processing
225
Format Conversion
200
205
315
285
250
270

FIGURE 5

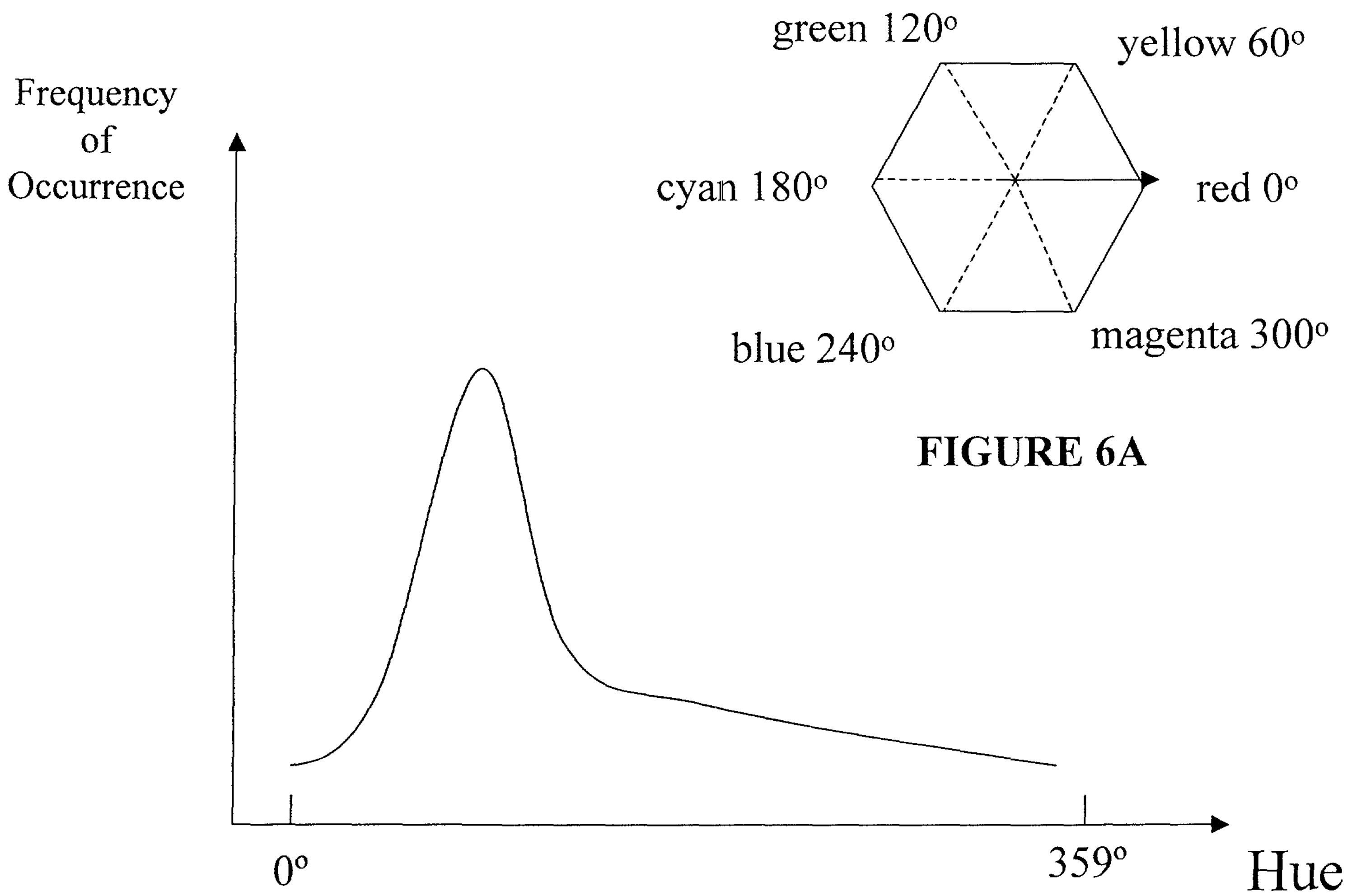


FIGURE 6A

FIGURE 6B

European Patent Office

# EUROPEAN SEARCH REPORT

Application Number
EP 01 31 0202

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 956 026 A (RATAKONDA KRISHNA) 21 September 1999 (1999-09-21) * column 9, line 30 - column 10, line 42 * --- | 1-17 | G11B27/28 G11B27/32 G11B27/034 G06F17/30 |
| X | HANJALIC A ET AL: "AN INTEGRATED SCHEME FOR AUTOMATED VIDEO ABSTRACTION BASED ON UNSUPERVISED CLUSTER-VALIDITY ANALYSIS" IEEE TRANSACTIONS ON CIRCUITS AND SYSTEMS FOR VIDEO TECHNOLOGY, IEEE INC. NEW YORK, US, vol. 9, no. 8, December 1999 (1999-12), pages 1280-1289, XP000873451 ISSN: 1051-8215 * page 1286, left column, "C. Forming the Sequence Abstract" * --- | 1-17 | |
| X | ZHUANG Y ET AL: "ADAPTIVE KEY FRAME EXTRACTION USING UNSUPERVISED CLUSTERING" PROCEEDINGS OF THE 1998 INTERNATIONAL CONFERENCE ON IMAGE PROCESSING. ICIP '98. CHICAGO, IL, OCT. 4 - 7, 1998, INTERNATIONAL CONFERENCE ON IMAGE PROCESSING, LOS ALAMITOS, CA: IEEE COMPUTER SOC, US, vol. 1 CONF. 5, 4 October 1998 (1998-10-04), pages 866-870, XP001044681 ISBN: 0-8186-8822-X * page 867, right column and page 868, left column: "3. Clustering based approach" * ----- | 1-17 | TECHNICAL FIELDS SEARCHED (Int.Cl.7) G11B G06F H04N |

The present search report has been drawn up for all claims

| Place of search | Date of completion of the search | Examiner |
|---|---|---|
| THE HAGUE | 26 March 2002 | Mourik, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 01 31 0202

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2002

| Patent document cited in search report | | Publication date | Patent family member(s) | | | Publication date |
|---|---|---|---|---|---|---|
| US 5956026 | A | 21-09-1999 | EP | 1040429 | A1 | 04-10-2000 |
| | | | WO | 9932993 | A1 | 01-07-1999 |
| | | | JP | 2001527304 | T | 25-12-2001 |
| | | | US | 5995095 | A | 30-11-1999 |

EPO FORM P0459

For more details about this annex : see Official Journal of the European Patent Office, No. 12/82